# EUROPEAN PATENT SPECIFICATION

(11) **EP 2 713 147 B1**
(45) Date of publication and mention of the grant of the patent: **25.09.2019**
(21) Application number: 13168300.5
(22) Date of filing: 17.05.2013
(51) Int. Cl.: G01J 3/02, H01H 3/16

(54) **Optical detection instrument comprising triggering device**
Optisches Erfassungsinstrument mit einer Auslösevorrichtung
Instrument de détection optique comprenant dispositif de déclenchement

(30) Priority: 26.09.2012 CN 201210364138
(43) Date of publication of application: 02.04.2014
(73) Proprietor: Nuctech Company Limited, TongFang Building, Shuangqinglu, Haidian District Beijing 100084 (CN); Tsinghua University, Beijing 100084 (CN)
(72) Inventor: Zhang, Li, 100084 Beijing (CN); Wang, Hongqiu, 100084 Beijing (CN); Yi, Yumin, 100084 Beijing (CN); Zhang, Shixin, 100084 Beijing (CN); Feng, Huacheng, 100084 Beijing (CN)
(74) Representative: Isarpatent

(56) References cited:
- DE-U1-202008 000 981
- JP-A- 2005 312 927
- US-A- 4 224 950
- US-A1- 2011 032 960
- US-B2- 8 107 069

## Description

### BACKGROUND OF THE INVENTION

### 1. Field of the Invention

The present invention relates to the field of an optical detection instrument, in particular to a triggering device for an optical detection instrument and an optical detection instrument.

### 2. Description of the Related Art

US 2011/0032960 A1 discloses a handheld low-level laser therapy apparatus. The apparatus may comprise an eye safety activation mechanism. The apparatus can be activated by pressing an eye safety activation switch against the body of a user.

US 8107069 B2 discloses a method and an apparatus for conducting Raman spectroscopy. The apparatus comprises a spectrometer including a radiation source. The apparatus may further comprise a force-activated switch for controlling the radiation source.

DE 20 2008 000981 U1 relates to a measuring aid for reproducible measurements on spectrophotometers, on which a test plate to be measured is traversed on a rasterized table movable in the Y-direction, the measuring device is traversed in the X-direction on a rastered portal and the pressure is applied by means of a weight via a lever. Further prior art is disclosed in JP2005312927.

An optical detection instrument, for example, a spectrometer, is a detection apparatus widely used in industries. It may be used to detect various properties of all kinds of objects to be detected, such as, liquid, gas, solid bulks, and powder. For detecting the objects by the optical detection instrument, a triggering device is generally needed to start an optical detecting process, for example, to trigger a module for emitting and detecting laser to begin to receive and process data.

In the conventional optical detection instrument, the emission of the laser is usually controlled by an optical fiber probe and a button switch or a key. It needs manual triggering individually for each detection, and thus it may not be suitable to circumstances with a great detection workload and a high detection speed.

As can be seen, it is desired to provide a triggering device which has a high triggering speed and a high efficiency and can be operated conveniently and consistently.

### SUMMARY

An object of the present invention is to provide a triggering device for an optical detection instrument, which has a high triggering speed and a high efficiency and can be operated conveniently and consistently.

This is achieved by the features of the independent claims.

Further, the slidable sleeve may include a pressed portion configured to be pressed against the object or a vessel accommodating the object to allow the slidable sleeve to slide towards the triggering switch.

Further, the sliding trigger may further comprise a resetting elastic member configured to provide a restoring force to move the slidable sleeve away from the triggering switch in the case that the pressed portion is disengaged from the object or the vessel.

Specifically, the sliding trigger may further comprise a triggering reed or lever, the triggering reed or lever being pressed by the slidable sleeve to trigger the triggering switch when the slidable sleeve slides towards the triggering switch.

Specifically, the triggering device may further include a decorated cover for shielding the triggering switch, the decorated cover being fixed surrounding the slidable sleeve on a casing of the optical detection instrument.

Specifically, the slidable trigger may further include a guide member, and wherein an outer wall of the hollow shaft is provided with a guide groove corresponding to the guide member, the guide member having one end received in an inner wall of the slidable sleeve and the other end inserted in the guide groove corresponding to the guide member and wherein the guide member is capable of sliding in the guide groove corresponding to the guide member.

Specifically, the triggering device may further include a hollow shaft supporting mount configured to hold the hollow shaft and a switch supporting mount configured to hold the triggering switch, the hollow shaft supporting mount and the switch supporting mount being fixed with respect to the casing of the optical detection instrument.

Specifically, a travel length by which the slidable cover moves to trigger the triggering switch may be determined by a focus position of the detecting light.

Further, the sliding trigger may comprise a bracket configured to carry the object, and the triggering device may further comprise a sliding chute seat configured to carry the bracket, the bracket being movable along the sliding chute seat to bring the object on the bracket to move towards or away from the triggering switch.

Further, the trigger switch may be held on the switch supporting mount and an opening of the hollow shaft for light entrance and exit may be located below the triggering switch on the switch supporting mount.

Further, the bracket may be provided with a shielding plate which is capable of moving along with the bracket towards or away from the opening of the hollow shaft.

Further, the sliding chute seat may be provided with a limit switch configured to switch off the triggering switch when the shielding plate is located at a predetermined distance from the triggering switch.

Specifically, the bracket may be provided with an object pad or recess for receiving the object.

In accordance with another aspect of the present invention, an optical detection instrument, which includes any of the above the triggering devices, is provided.

With at least one of the above aspects, the triggering device can automatically start the detection operation of the optical detection instrument and stop the detection operation timely, by moving the sliding trigger with respect to the triggering switch. It can not only improve the triggering speed and efficiency of the triggering device, but also reduce the complication of the detection operation so as to avoid loss caused by faults of the triggering operation and resetting operation.

### BRIEF DESCRIPTION OF THE DRAWINGS

Fig. 1 is a schematic perspective view showing a triggering device according to an embodiment of the present invention.
Fig. 2 is a schematic side view showing the triggering device shown in Fig. 1.
Fig. 3 is a schematic partial cross sectional view taken along a line A-A and showing the triggering device shown in Fig. 2.
Fig. 4 is a schematic side view showing a triggering device according to another embodiment.
Fig. 5 is a schematic front cross sectional view taken along a line A'-A' and showing the triggering device shown in Fig. 4.
Fig. 6 is a schematic top view showing the triggering device shown in Fig. 4.

### DETAILED DESCRIPTION OF THE EMBODIMENTS

Technical solutions of the present invention will be described hereinafter in detail by specific embodiments with reference to the accompanying drawings. Throughout the specification, same or similar reference numerals refer to same or similar parts. The description of embodiments with reference to the drawings is intended to explain the general inventive concept of the present invention, rather than making any limitations on the present invention.

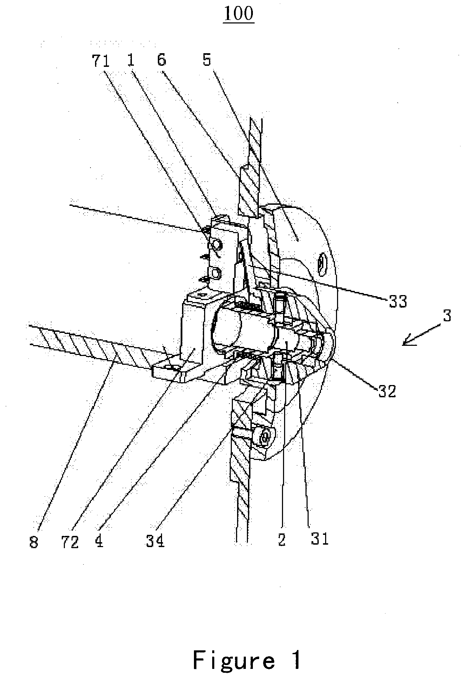

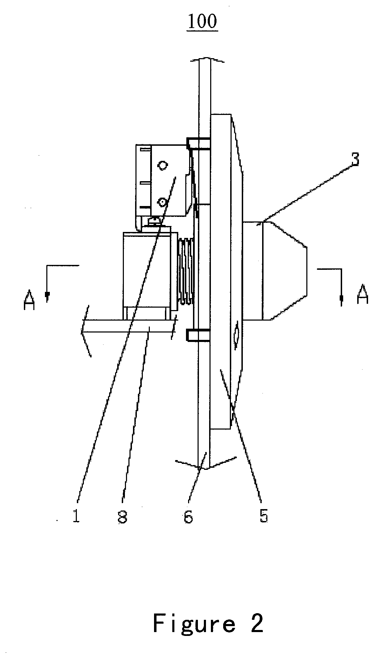

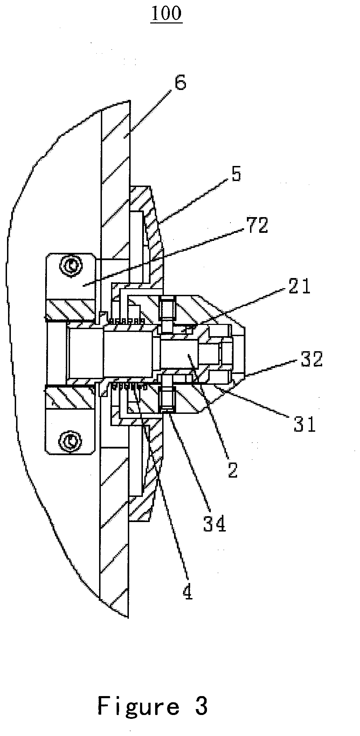

Figs. 1-3 schematically show a triggering device 100 for an optical detection instrument according to an embodiment of the present invention. The triggering device 100 includes a triggering switch 1, a hollow shaft 2 accommodating an optical path and a sliding trigger 3. The triggering switch 1 is configured to start up an optical detection to emit detection light when it is triggered. The hollow shaft 2 is configured to allow the detection light to pass through its cavity to reach an object to be detected in a detection process. The sliding trigger 3 is configured to trigger or reset the triggering switch 1 by sliding towards or away from the triggering switch 1 along the hollow shaft 2, so as to start or end the optical detection. The triggering device 100 controls directly the triggering and resetting of the triggering switch 1 by sliding of the sliding trigger 3 without any additional arrangements, such as button triggers.

In the embodiment shown in Figs. 1-3, the sliding trigger 3 may include a slidable sleeve 31 which may be seated on an outer wall of the hollow shaft 2 and may slide towards or away from the triggering switch 1 along the hollow shaft 2. The slide of the slidable sleeve 31 towards the triggering switch 1 may trigger the triggering switch 1, while the slide of the slidable sleeve 31 away from the triggering switch 1 may reset the triggering switch 1, vice versa. As an example, the slidable sleeve 31 may have a pressed portion 32, which may be pressed against the object to be detected or a vessel accommodating the object to allow the slidable sleeve 31 to slide towards the triggering switch 1. With the pressed portion 32, the slidable sleeve 31 may trigger the triggering switch 1 by a simple action. The action also may be done along with the positioning operation of the hollow shaft 2 and the object to be detected without any additional complicated operations. In an example, the pressed portion 32 may be located at a front end of the slidable sleeve 31 and may extend beyond an opening end of the hollow shaft 2 to protect the hollow shaft 2 from collision. The slidable sleeve 31 may be arranged in various shapes, such as a cylinder, a taper, a cyber, a pyramid or a prism, to meet various requirements. The pressed portion 32 may also be arranged in various forms, such as a plane, a slope, steps or protrusions. In the embodiment shown in Figs. 1-3, a front end face of the slidable sleeve 31 or a tapered face of the outer wall of the slidable sleeve 31 may be used as the pressed portion 32.

However, it is not necessary that the triggering is performed by pressing the pressed portion 32 against the object to be detected or the vessel accommodating the object. The triggering may be performed by forcing the slidable sleeve 31 to slide in other means, for example, by forcing the slidable sleeve 31 to slide by a magnetic force or an electrical force. And in the practical operation, the pressed portion 32 is also not limited to be pressed against the object to be detected or the vessel accommodating the object. For instance, the pressed portion 32 may be forced by other tools, even by hand of the user, such that the slidable sleeve 31 can slide to complete the triggering operation.

The cavity of the hollow shaft 2 may be configured to allow detecting light to pass through it. An opening for light entrance and exit is provided at a front end of the cavity to allow the detecting light to leave from the opening to the object to be detected and to return into the cavity of the hollow shaft 2. The cavity of the hollow shaft 2 also may be provided with optical elements, such as focus lens, therein. Certainly, the optical elements may not be provided in the cavity of the hollow shaft 2. The outer wall of the hollow shaft 2 may be smooth, or may be provided with shoulders, steps, protrusions or recesses on the outer wall thereof for being fitted to the sliding trigger 3 (for example, the slidable sleeve 31). The relative position between the hollow shaft 2 and the triggering switch 1 may be kept constantly.

In an example, the sliding trigger 3 also may include a resetting elastic member 4, for example a spring, such as a helical spring, a Belleville spring and a wire spring. The resetting elastic member 4 is configured to supply a restoring force to allow the slidable sleeve 31 to move away from the triggering switch 1 when the pressed portion 32 is separated from the object to be detected or the vessel accommodating the object. In the example shown in Fig. 1, the resetting elastic member 4 is a spring located between a rear end of the slidable sleeve 31 and the shoulder of the hollow shaft 2. When the slidable sleeve 31 is pressed towards the triggering switch 1, for example, it is pressed against the object to be detected or the vessel accommodating the object, the slidable sleeve 31 approaches or contacts the triggering switch 1 against the elastic force of the spring to trigger the triggering switch 1. In contrast, when the slidable sleeve 31 is no longer pressed, for example, it is disengaged from the object to be detected or the vessel accommodating the object, the spring provides a restoring force to force the slidable sleeve 31 to move away from the triggering switch 1 to reset the triggering switch 1. However, the structure of the resetting elastic member 4 is not limited to this, for example, it also may be implemented as a hinge lever, reed or other known elastic members in the art which can provide the restoring force.

As an example, the sliding trigger 3 also may include a triggering reed or lever 33. The triggering reed or lever 33 may assist the slidable sleeve 31 to trigger the triggering switch 1. The slidable sleeve 31 presses the triggering reed or lever 33 to trigger the triggering switch 1 by the triggering reed or lever 33 when the slidable sleeve 31 slides towards the triggering switch 1. Triggering the triggering switch 1 by the triggering reed or lever 33, rather than triggering the triggering switch 1 directly by the slidable sleeve 31, may improve the triggering accuracy and prevent the triggering switch 1 from being subjected to too large impacts.

In an example, the hollow shaft 2 may be provided with a transparent window at the opening thereof. The transparent window may prevent contamination, such as dusts or gas flow, from entering the cavity of the hollow shaft 2 to affect the optical path adversely while ensuring the detecting light to pass through the window, to be irradiated on the object to be detected and to return into the cavity of the hollow shaft 2. The window may be fixed to the hollow shaft 2 by adhesives or thread press connections.

As an example, the triggering device 10 also may include a decorated cover 5 for shielding the triggering switch 1. The decorated cover 5 may be fixed surrounding the slidable sleeve 31 on a casing 6 of the optical detection instrument. The decorated cover 5 may be in various shapes, for example, circle, taper and square. The decorated cover 5 may prevent the triggering switch 1 from contacting with objects out of the instrument and improve appearance of the instrument. There may be a gap between the decorated cover 5 and the slidable sleeve 31. The gap may ensure the slidable sleeve 31 can move freely along the hollow shaft 2. The gas may be configured to be variable, which may be suited to the requirements for various slidable sleeves 31.

In an example, the sliding trigger 3 may further include a guide member 34. Correspondingly, the outer wall of the hollow shaft 2 may be provided with a guide groove 21 corresponding to the guide member 34. The guide member 34 may have one end received in the inner wall of the slidable sleeve 31 and the other end inserted in the corresponding guide groove 21. The guide member 34 may be slidable in the guide groove 21 corresponding to the guide member 34. The guide member 34 may be fitted to the guide groove 21, which can not only prevent the slidable sleeve 31 from falling in a relax state (i.e., in a reset state in which the slidable sleeve 31 is not pressed against the object to be detected or other objects), but also can guide the slidable sleeve 31 to slide along a desired direction relative to the hollow shaft 2. The guide groove 21 may be provided in an axial direction of the hollow shaft 2, and it may be a straight groove or an annular groove. The travel length by which the slidable sleeve 31 moves to trigger the triggering switch 1 may be determined by the length of the guide groove 21. The guide member 34 may be a guide screw, a guide pin, a guide axle, or a guide block.

With the above configuration of the sliding trigger 3, the positioning operation and the triggering operation of the optical detection instrument relative to the object to be detected may be done by one action. The optical detection instrument often needs that the detection head and the object to be detected have a special position to improve measuring accuracy. For example, the optical detection instrument often needs to focus the detecting light onto a measuring point for the object to be detected to achieve a good SNR (signal to noise ratio). It requires that the distance between the focusing element (for example lens) of the optical detection instrument and the object to be detected meets the requirement for the focusing position for the detecting light. If the distance is too large or too small, the detecting light will not be focused to induce a poor SNR and a reduced measuring accuracy. With the above configuration of the sliding trigger 3, the distance between the optical element (for example focusing lens) in the detection optical path and the object to be detected may be determined by the relative position between the slidable sleeve 31 and the hollow shaft 2 and the travel length of the slidable sleeve 31. In an example, the travel length by which the slidable sleeve 31 moves to trigger the triggering switch 1 may be determined by the focusing position of the detecting light. In this way, the distance between the optical element in the detection optical path and the object to be detected can meet the requirement for focusing position while the slidable sleeve 31 triggers the triggering switch 1, such that the optical detection may be performed timely and conveniently. Thus, the optical detection instrument does not need to perform the triggering in a separated triggering mode after completing a separated positioning operation. Therefore, both of the structure and the operation of the optical detection instrument can be simplified.

As an example, the triggering device 100 may further include a hollow shaft supporting mount 72 for fixing the hollow shaft 2 and a switch supporting mount 71 for fixing the triggering switch 1. The hollow shaft supporting mount 72 and the switch supporting mount 71 are held securely with respect to the casing 6 of the optical detection instrument. In an example, the switch supporting mount 71 may be mounted on the hollow shaft supporting mount 72 together. The hollow shaft supporting mount 72 may in turn be mounted on an optical path support 8. The optical path support 8 may support other optical elements in the detection optical path. By means of the optical path support 8 and the hollow shaft supporting mount 72, the hollow shaft 2 may be held in a suitable position with respect to the other optical elements in the detection optical path.

In the above various embodiments, the triggering switch 1 may be a travel switch, a proximity switch or a photo-electric switch. The traveling trigger 3 may use triggering modes in which the sliding trigger 3 may contact or may not contact with (for example approach) the triggering switch 1 depending on different types of the triggering switch 1.

In the above embodiments, the slidable sleeve 31, the resetting elastic member 4, the hollow shaft 2, the guide member 34, the decorated cover 5, the switch supporting mount 71 and the hollow shaft supporting mount 72 may be made of metal, or may be made of non-metal.

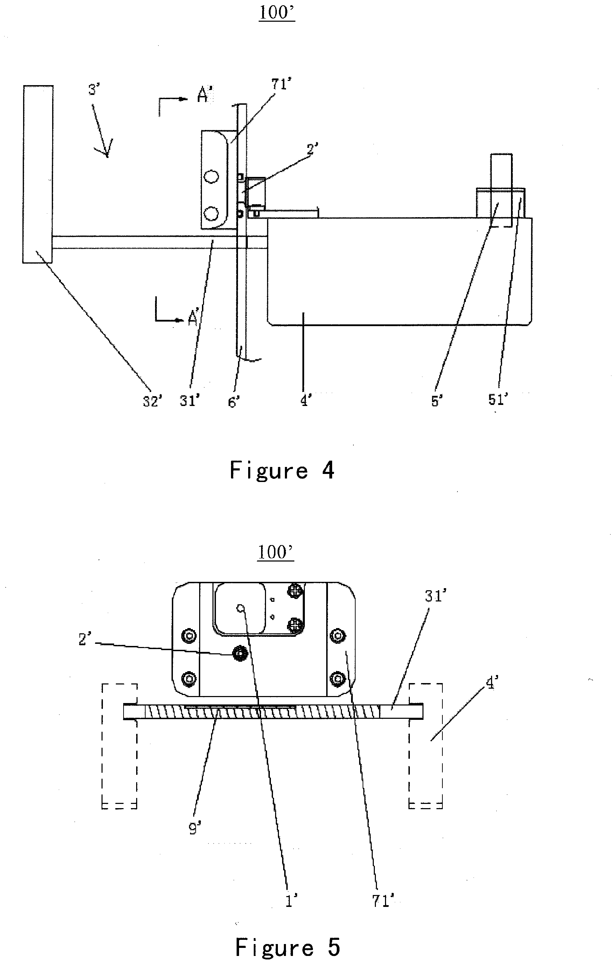

Figs. 4-6 illustrate a triggering device 100' according to an alternative to the present invention. In the embodiment, the triggering device 100' also may include a triggering switch 1', a hollow shaft 2' for accommodating an optical path and a sliding trigger 3'. The sliding trigger 3' may include a bracket 31' carrying the object to be detected. The triggering device 100' may further include a sliding chute seat 4' carrying the bracket 31'. The bracket 31' may move along the sliding chute seat 4' to move the object to be detected carried on the bracket 31' towards or away from the triggering switch 1'.

In an example, the triggering switch 1' may be mounted on the switch supporting mount 71'. The opening of the hollow shaft 2', from which the detecting light leaves, may be located below the triggering switch 1' on the switch supporting mount 71'. In more specific example, the switch supporting mount 71' may be fixed on the casing 6' of the optical detection instrument. The hollow shaft 2' may be connected securely to the sliding chute seat 4' and held fixedly with respect to the switch supporting mount 71'.

In an example, the bracket 31' may be located below the switch supporting mount 71' and move in a direction perpendicular to the triggering switch 1'. However, the present invention is not limited to this, for example, the bracket 31' may be located above the switch supporting mount 71'or on a side of the switch supporting mount 71'. The bracket 31' may trigger the triggering switch 1' by a triggering portion (for example, protrusions, steps, or areas in which the transmissivity or reflectivity may vary locally) provided thereon, or by the object carried on the bracket 31' to be detected. In the embodiment, as those shown in Figs. 1-3, the triggering switch 1' may be a travel switch, a proximity switch or a photo-electric switch. The traveling trigger 3' may use triggering modes in which the sliding trigger 3' may contact or may not contact with (for example approach) the triggering switch 1' depending on different types of the triggering switch 1'.

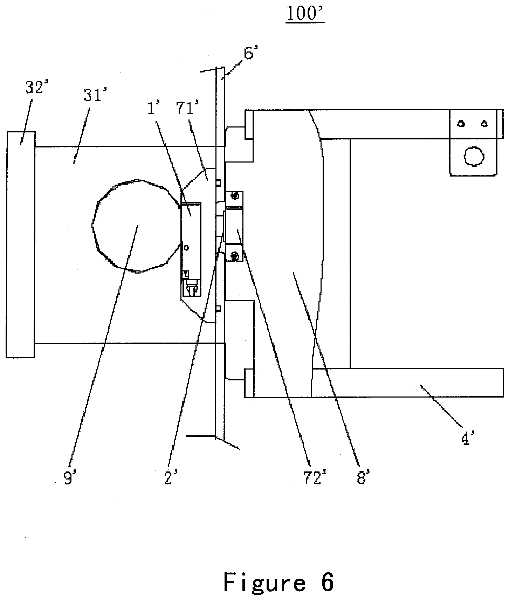

In an example, the bracket 31' may be provided with a shielding plate 32'. The shielding plate 32' may move along with the bracket 31' towards or away from the opening of the hollow shaft 2'. The bracket 32' may move to a position adjacent to the triggering switch 1' and the opening of the hollow shaft 2' to shield them to close the detection space when the optical detection is not performed. Thus, the space can be saved and the triggering switch can be prevented from being collided accidently. Additionally, the shielding plate 32' may be configured to shield light beams exiting the opening of the hollow shaft 2' to avoid the damage of the light beams to the user's eyes. The shielding plate 32' may be arranged at an end of the bracket 31' (as shown in Fig. 6) to save the space to the largest extent. However, it is not necessary, for example, and the shielding plate 32' may be arranged at other positions of the bracket 31'.

In order to prevent the triggering switch 1' from being triggered in error by the shielding plate 32' when it moves to the adjacent region of the triggering switch 1', as an example, a limit switch 5' may be provided on the sliding chute seat 4'. The limit switch 5' may switch off the triggering switch 1' when the shielding plate 32' is located at a predetermined distance (for example, the predetermined distance is greater than the triggering distance of the triggering switch 1') from the triggering switch 1'. In a specific example, the limit switch 5' may be actuated by the bracket 31'. The limit switch 5' may be positioned such that the part of the bracket 31' in the sliding chute seat 4' will actuate the limit switch 5' to switch off the triggering switch 1' before the shielding plate 32' moves to the adjacent region of the triggering switch 1' along with the bracket 31'. In an example, the limit switch 5' may be supported by a limit switch support 51'.

In the above embodiments, the bracket 31' may be provided with an object pad or recess for receiving the object to be detected. The position of the object pad or recess on the bracket 31' may depend on the triggering distance of the triggering switch 1'.

In the above embodiments, the hollow shaft 2' may also be fixed on the hollow shaft supporting mount 72', and the hollow shaft supporting mount 72' may in turn be fixed on an optical support 8' which may be connected integrally to the sliding chute seat 4'.

In the above embodiments, the shielding plate 32', the bracket 31', the casing 3', the sliding chute seat 4', the limit switch support 51', the switch supporting mount 71', the object pad 9', the hollow shaft 2', the hollow shaft supporting mount 72' or the optical path supporting mount 8' may be made of metal or non-metal.

In the above various embodiments, the triggering switch 1, 1' may be a contact triggering switch, or a non-contact triggering switch, in particular, it may be for example a travel switch, a proximity switch, a mechanical switch or a photo-electric switch.

The present invention also provides an optical detection instrument including the above triggering device 100, 100'. In the optical detection instrument, the triggering device 100, 100' is associated with the detection performing components, such as a laser control circuit and a signal collection and process module, in the optical detection instrument for connections and control. When the triggering 100, 100' is triggered by the sliding trigger 3, 3', these detection performing components actuate the laser to emit the detecting light and actuate the signal collection and process module to perform various operations required for the optical detection. By means of the above triggering device 100, 100', the optical detection instrument can perform an optical detection operation conveniently, quickly and accurately. It is advantageous in particular in the application with a great detection workload and a rigorous requirement for the detection efficiency. The optical detection instrument may for example be a spectrometer, or other instruments which perform detection using light beams.

Although the embodiments of the present invention have been described in conjunction with figures, they are only examples for explaining the present invention and are not intended to limit the present invention.

Although some embodiments for the general concept of the present invention have been shown and explained, the skilled person in the art will appreciate that modifications to the above embodiments can be carried out. The scope of the present invention is defined by the appended claims.

## Claims

1. An optical detection instrument, comprising a triggering device (100) and a laser, the triggering device comprising:
a triggering switch (1) configured to start the laser to emit a detecting light when the triggering switch (1) is triggered,
a hollow shaft (2) for accommodating an optical path, the hollow shaft (2) being configured to allow the detecting light to pass through its cavity to reach an object to be detected, the hollow shaft (2) and the triggering switch (1) having a fixed relative position, and
a sliding trigger (3) configured to move towards or away from the triggering switch (1) with respect to the hollow shaft (2) to trigger or reset the triggering switch (1),
**characterized in that** the optical detection instrument further comprises a focus lens provided in the optical path in the cavity of the hollow shaft (2) for focusing the detecting light onto a measuring point, wherein the sliding trigger (3) comprises a slidable sleeve (31) which is seated on an outer wall of the hollow shaft (2) and is capable of sliding towards or away from the triggering switch (1) with respect to the hollow shaft and a travel length by which the slidable sleeve (31) moves to trigger the triggering switch (1) is determined by a focus position of the detecting light, such that the object to be detected can meet the requirement for focusing position while the slideable sleeve (31) triggers the triggering switch.

2. The optical detection instrument according to claim 1, wherein the slidable sleeve (31) comprises a pressed portion (32) configured to be pressed against the object or a vessel accommodating the object to allow the slidable sleeve (31) to slide towards the triggering switch (1).

3. The optical detection instrument according to claim 2, wherein the sliding trigger (3) further comprises a resetting elastic member (4) configured to provide a restoring force to move the slidable sleeve (31) away from the triggering switch (1) in a case that the pressed portion (32) is disengaged from the object or the vessel.

4. The optical detection instrument according to any one of claims 1-3, wherein the sliding trigger (3) further comprises a triggering reed (33) or lever, the triggering reed (33) or lever being pressed by the slidable sleeve (31) to trigger the triggering switch (1) when the slidable sleeve (31) slides towards the triggering switch (1).

5. The optical detection instrument according to any one of claims 1-3, further comprises a casing (6), wherein the triggering device (100) further comprises a decorated cover for shielding the triggering switch (1), the decorated cover being fixed surrounding the slidable sleeve (31) on the casing.

6. The optical detection instrument according to any one of claims 1-3, wherein the slidable trigger (3) further comprises a guide member (34), and wherein an outer wall of the hollow shaft (2) is provided with a guide groove (21) corresponding to the guide member (34), the guide member (34) having one end received in an inner wall of the slidable sleeve (31) and the other end inserted in the guide groove (21) corresponding to the guide member (34) and wherein the guide member (34) is capable of sliding in the guide groove (21) corresponding to the guide member (34).

7. The optical detection instrument according to any one of claims 1-3, further comprises a casing (6), wherein the triggering device (100) further comprises a hollow shaft supporting mount (72) configured to hold the hollow shaft (2) and a switch supporting mount (71) configured to hold the triggering switch (1), the hollow shaft supporting mount (72) and the switch supporting mount (71) being fixed with respect to the casing (6).

## Patentansprüche

1. Optisches Detektionsinstrument, das eine Auslösevorrichtung (100) und einen Laser umfasst, wobei die Auslösevorrichtung Folgendes umfasst:
einen Auslöseschalter (1), der dafür ausgebildet ist, den Laser zu starten, um ein Detektionslicht auszusenden, wenn der Auslöseschalter (1) ausgelöst wird,
eine Hohlwelle (2) zum Aufnehmen eines optischen Pfades,
wobei die Hohlwelle (2) dafür ausgebildet ist, das Detektionslicht durch ihren Hohlraum passieren zu lassen, um ein zu detektierendes Objekt zu erreichen, wobei die Hohlwelle (2) und der Auslöseschalter (1) eine feste relative Position aufweisen, und
einen Schiebeauslöser (3), der dafür ausgebildet ist, sich zu dem Auslöseschalter (1) mit Bezug auf die Hohlwelle (2) hin oder von ihm fort zu bewegen, um den Auslöseschalter (1) auszulösen oder zurückzusetzen,
**dadurch gekennzeichnet, dass** das optische Detektionsinstrument des Weiteren eine Fokuslinse umfasst, die in dem optischen Pfad in dem Hohlraum der Hohlwelle (2) angeordnet ist, um das Detektionslicht auf einen Messpunkt zu fokussieren,
wobei der Schiebeauslöser (3) eine verschiebbare Hülse (31) umfasst, die auf einer Außenwand der Hohlwelle (2) sitzt und in der Lage ist, sich zu dem Auslöseschalter (1) mit Bezug auf die Hohlwelle hin und von ihm fort zu verschieben, und
eine Bewegungslänge, um die sich die verschiebbare Hülse (31) bewegt, um den Auslöseschalter (1) auszulösen, durch eine Fokusposition des Detektionslichts bestimmt wird, dergestalt, dass das zu detektierende Objekt die Anforderung hinsichtlich der Fokussierposition erfüllen kann, während die verschiebbare Hülse (31) den Auslöseschalter auslöst.

2. Optisches Detektionsinstrument nach Anspruch 1, wobei die verschiebbare Hülse (31) einen gedrückten Abschnitt (32) umfasst, der dafür ausgebildet ist, gegen das Objekt oder ein das Objekt aufnehmendes Behältnis gedrückt zu werden, damit sich die verschiebbare Hülse (31) zu dem Auslöseschalter (1) hin verschieben kann.

3. Optisches Detektionsinstrument nach Anspruch 2, wobei der Schiebeauslöser (3) des Weiteren ein elastisches Rückstellelement (4) umfasst, das dafür ausgebildet ist, eine Rückstellkraft zu erzeugen, um die verschiebbare Hülse (31) von dem Auslöseschalter (1) fort zu bewegen, falls der gedrückte Abschnitt (32) aus dem Eingriff mit dem Objekt oder dem Behältnis gelöst wird.

4. Optisches Detektionsinstrument nach einem der Ansprüche 1-3, wobei der Schiebeauslöser (3) des Weiteren eine Auslösekontaktfeder (33) oder einen Hebel umfasst, wobei die Auslösekontaktfeder (33) oder der Hebel durch die verschiebbare Hülse (31) gedrückt wird, um den Auslöseschalter (1) auszulösen, wenn sich die verschiebbare Hülse (31) zu dem Auslöseschalter (1) hin verschiebt.

5. Optisches Detektionsinstrument nach einem der Ansprüche 1-3, das des Weiteren ein Gehäuse (6) umfasst, wobei die Auslösevorrichtung (100) des Weiteren eine verzierte Abdeckung zum Abschirmen des Auslöseschalters (1) umfasst, wobei die verzierte Abdeckung so fixiert ist, dass sie die verschiebbare Hülse (31) an dem Gehäuse umgibt.

6. Optisches Detektionsinstrument nach einem der Ansprüche 1-3, wobei der verschiebbare Auslöser (3) des Weiteren ein Führungselement (34) umfasst und wobei eine Außenwand der Hohlwelle (2) mit einer Führungsnut (21) versehen ist, die dem Führungselement (34) entspricht, wobei ein Ende des Führungselements (34) in einer Innenwand der verschiebbaren Hülse (31) aufgenommen ist und das andere Ende in die Führungsnut (21), die dem Führungselement (34) entspricht, eingesetzt ist, und wobei das Führungselement (34) in der Lage ist, in der Führungsnut (21), die dem Führungselement (34) entspricht, zu gleiten.

7. Optisches Detektionsinstrument nach einem der Ansprüche 1-3, das des Weiteren ein Gehäuse (6) umfasst, wobei die Auslösevorrichtung (100) des Weiteren eine Hohlwellenstützmontagehalterung (72) umfasst, die dafür ausgebildet ist, die Hohlwelle (2) zu halten, und eine Schalterstützmontagehalterung (71) umfasst, die dafür ausgebildet ist, den Auslöseschalter (1) zu halten, wobei die Hohlwellenstützmontagehalterung (72) und die Schalterstützmontagehalterung (71) mit Bezug auf das Gehäuse (6) fixiert sind.

## Revendications

1. Instrument de détection optique, comprenant un dispositif de déclenchement (100) et un laser, le dispositif de déclenchement comprenant :
un commutateur de déclenchement (1) configuré pour démarrer le laser afin d'émettre une lumière de détection lorsque le commutateur de déclenchement (1) est déclenché,
un arbre creux (2) pour accueillir un chemin optique, l'arbre creux (2) étant configuré pour permettre à la lumière de détection de passer à travers sa cavité afin d'atteindre un objet à détecter, l'arbre creux (2) et le commutateur de déclenchement (1) ayant une position relative fixe, et
un déclencheur coulissant (3) configuré pour se déplacer en direction ou à l'opposé du commutateur de déclenchement (1) par rapport à l'arbre creux (2) afin de déclencher ou de réinitialiser le commutateur de déclenchement (1),
**caractérisé en ce que** l'instrument de détection optique comprend en outre une lentille de focalisation prévue dans le chemin optique dans la cavité de l'arbre creux (2) pour focaliser la lumière de détection sur un point de mesure,
dans lequel le déclencheur coulissant (3) comprend un manchon pouvant coulisser (31) qui est placé sur une paroi externe de l'arbre creux (2) et est capable de coulisser en direction ou à l'opposé du commutateur de déclenchement (1) par rapport à l'arbre creux et une longueur de trajet sur laquelle se déplace le manchon pouvant coulisser (31) afin de déclencher le commutateur de déclenchement (1) est déterminée par une position de focalisation de la lumière de détection, de sorte que l'objet à détecter puisse satisfaire l'exigence de position de focalisation lorsque le manchon pouvant coulisser (31) déclenche le commutateur de déclenchement.

2. Instrument de détection optique selon la revendication 1, dans lequel le manchon pouvant coulisser (31) comprend une portion pressée (32) configurée pour être pressée contre l'objet ou un récipient accueillant l'objet afin de permettre au manchon pouvant coulisser (31) de coulisser en direction du commutateur de déclenchement (1).

3. Instrument de détection optique selon la revendication 2, dans lequel le déclencheur coulissant (3) comprend en outre un organe élastique de réinitialisation (4) configuré pour fournir une force de rappel afin de déplacer le manchon pouvant coulisser (31) à l'opposé du commutateur de déclenchement (1) dans le cas où la portion pressée (32) est désengagée de l'objet ou du récipient.

4. Instrument de détection optique selon l'une quelconque des revendications 1 à 3, dans lequel le déclencheur coulissant (3) comprend en outre une languette (33) ou un levier de déclenchement, la languette (33) ou le levier de déclenchement étant pressé(e) par le manchon pouvant coulisser (31) afin de déclencher le commutateur de déclenchement (1), lorsque le manchon pouvant coulisser (31) coulisse en direction du commutateur de déclenchement (1).

5. Instrument de détection optique selon l'une quelconque des revendications 1 à 3, comprenant en outre un boîtier (6), dans lequel le dispositif de déclenchement (100) comprend en outre un couvercle décoré pour protéger le commutateur de déclenchement (1), le couvercle décoré étant fixé autour du manchon pouvant coulisser (31) sur le boîtier.

6. Instrument de détection optique selon l'une quelconque des revendications 1 à 3, dans lequel le déclencheur pouvant coulisser (3) comprend en outre un organe de guidage (34), et dans lequel une paroi externe de l'arbre creux (2) est dotée d'une rainure de guidage (21) correspondant à l'organe de guidage (34), l'organe de guidage (34) ayant une extrémité reçue dans une paroi interne du manchon pouvant coulisser (31) et l'autre extrémité insérée dans la rainure de guidage (21) correspondant à l'organe de guidage (34) et dans lequel l'organe de guidage (34) est capable de coulisser dans la rainure de guidage (21) correspondant à l'organe de guidage (34).

7. Instrument de détection optique selon l'une quelconque des revendications 1 à 3, comprenant en outre un boîtier (6), dans lequel le dispositif de déclenchement (100) comprend en outre une monture de support d'arbre creux (72) configurée pour contenir l'arbre creux (2) et une monture de support de commutateur (71) configurée pour contenir le commutateur de déclenchement (1), la monture de support d'arbre creux (72) et la monture de support de commutateur (71) étant fixes par rapport au boîtier (6).
